# EUROPÄISCHE PATENTSCHRIFT

(11) **EP 2 053 987 B1**
(45) Veröffentlichungstag und Bekanntmachung des Hinweises auf die Patenterteilung: **27.04.2011**
(21) Anmeldenummer: 07786571.5
(22) Anmeldetag: 06.08.2007
(51) Int. Cl.: A61C 8/00

(54) **ZAHNIMPLANTAT MIT PRIMÄRKRONE UND SEKUNDÄRKRONE**
DENTAL IMPLANT WITH PRIMARY CROWN AND SECONDARY CROWN
IMPLANT DENTAIRE COMPRENANT UNE COURONNE PRIMAIRE ET UNE COURONNE SECONDAIRE

(30) Priorität: 15.08.2006 DE 102006038395
(43) Veröffentlichungstag der Anmeldung: 06.05.2009
(73) Patentinhaber: Accura Holding B.V., 4611 Bergen-op-Zoom (NL)
(72) Erfinder: LAUX, Robert, 71560 Sulzbach/Murr (DE)
(74) Vertreter: Müller, Gottfried
(86) Internationale Anmeldenummer: PCT/EP2007/006920
(87) Internationale Veröffentlichungsnummer: WO 2008/019774

(56) Entgegenhaltungen:
- DE-A1- 19 959 366
- DE-U1- 9 202 656
- DE-U1- 20 102 531
- US-A- 4 932 868
- US-A- 5 302 125
- US-A- 5 584 695

## Beschreibung

Die Erfindung bezieht sich auf ein Zahnimplantat mit zwei als Primärkrone und Sekundärkrone ausgebildeten Implantatteilen nach dem Oberbegriff des Anspruches 1.

In der DE 10 2004 018 512 A1 wird ein derartiges Zahnimplantat beschrieben, bei dem ein Basisträger in den Kiefer des Patienten einzusetzen ist, wobei der Basisträger mit einer Primärkrone verbunden wird, beispielsweise mithilfe einer Schraubverbindung. Auf die Primärkrone, die konusförmig ausgebildet ist, wird eine Sekundärkrone aufgesetzt, die ihrerseits Träger einer Prothese oder einer Brücke sein kann. Die Verbindung zwischen Primärkrone und Sekundärkrone erfolgt über den konusförmigen Abschnitt an der Primärkrone, der in eine entsprechende Ausnehmung in der Sekundärkrone einragt. Gegenüberliegende Mantelseiten des konusförmigen Abschnittes an der Primärkrone besitzen einen unterschiedlichen Konuswinkel, was innerhalb eines schmalen Winkelbereichs eine Ausgleichsmöglichkeit im Zahnimplantat erlaubt.

Aus der US 5,480,304 ist es bekannt, ein Zahnimplantat mit zwei als Primärkrone und Sekundärkrone ausgebildeten und miteinander zu verbindenden Implantatteilen vorzusehen, von denen die Primärkrone von einem im Kiefer des Patienten zu verankernden Basisträger aufgenommen und die Sekundärkrone als Verbindungsglied mit zwei Kugelköpfen ausgebildet ist, von denen der eine Kugelkopf mit der Primärkrone und der andere Kugelkopf mit einem Pin verbunden ist, welcher Träger einer Prothese ist. Zwar bestehen verschiedene Bewegungsfreiheitsgrade zwischen der Primärkrone und der Sekundärkrone einerseits sowie der Sekundärkrone und dem Pin andererseits; nachteilig ist aber die verhältnismäßig aufwändige konstruktive Ausführung und die große Erstreckung des Zahnimplantats in Achsrichtung.

Die DE 92 02 656 U1 offenbart ein Zahnimplantat ohne Lösbarkeit der Zahnkrone. Das Zahnimplantat besitzt einen über ein zwischen Sekundärkrone und Zahnkrone angeordnetes Kugelgelenk realisierten Freiheitsgrad, über den die Winkellage der Zahnkrone eingestellt werden kann. Die gewünschte Winkellage wird über Spannmittel dauerhaft fixiert.

Von diesem Stand der Technik ausgehend liegt der Erfindung die Aufgabe zugrunde, ein Zahnimplantat, welches eine Primärkrone und eine Sekundärkrone umfasst, so auszubilden, dass ohne Beeinträchtigung der Funktionstüchtigkeit und der Dauerhaftigkeit der Verbindung Winkelabweichungen zwischen den Implantatachsen durch Primär- und Sekundärkrone und einer aufgesetzten Prothese bzw. Brücke ausgeglichen werden können. Zweckmäßig soll in unterschiedlichen Raumrichtungen ein Winkelausgleich möglich sein, um ein Verkanten der Prothese oder Brücke beim Einsetzen oder Abnehmen zu verhindern.

Diese Aufgabe wird erfindungsgemäß mit den Merkmalen des Anspruches 1 gelöst. Die Unteransprüche geben zweckmäßige Weiterbildungen an.

Das erfindungsgemäße Zahnimplantat umfasst zwei Implantatteile, die als Primärkrone und Sekundärkrone ausgebildet und miteinander zu verbinden sind. Auf der Sekundärkrone wird eine Prothese oder eine Brücke befestigt, wobei der Außenmantel der Sekundärkrone als Träger der Prothese bzw. Brücke in zumindest einer Ebene konus- bzw. kugelförmig ausgebildet und in einem korrespondierenden Lager der Prothese bzw. der Verblendung schwenkbar aufgenommen ist. Auf diese Weise wird eine Schwenkbarkeit der Sekundärkrone gegenüber der Prothese bzw. Brücke erreicht, wodurch ein zusätzlicher Freiheitsgrad bzw. eine Bewegungsmöglichkeit gegeben ist und die Sekundärkrone je nach den anatomischen Verhältnissen in Bezug auf die Längsachse des Zahnimplantates winklig ausgerichtet werden kann. Hierdurch kann sowohl in funktioneller als auch in technischer Hinsicht eine Verbesserung des Arbeitsergebnisses erzielt werden.

Die konus- bzw kugelförmig Ausführung des Außenmantels der Sekundärkrone und das entsprechend komplementär geformte Lager in der Prothese bzw. der Verblendung stellen ein mit einfachen konstruktiven Maßnahmen zu realisierendes, zusätzliches Gelenk dar. Das Lager ist als Ausnehmung in der Prothese bzw. Verblendung ausgeformt, das die konus- bzw kugelförmig Mantelfläche der Sekundärkrone aufnimmt. Diese Ausführung zeichnet sich durch einen besonders einfachen Aufbau aus.

Gemäß einer Weiterbildung der Erfindung ist die äußere Mantelfläche der Sekundärkrone kugel- oder zumindest teilkugelförmig ausgebildet und in einem entsprechend komplementär ausgeführten Lager in der Prothese bzw. der Verblendung schwenkbar aufgenommen. Die teilkugelförmige Ausführung ist als dreidimensionale Erweiterung der konus- bzw kugelförmig Ausführung zu verstehen, wodurch nicht nur ein, sondern insgesamt zwei zusätzliche rotatorische Bewegungsfreiheitsgrade in unterschiedlichen Raumrichtungen gegeben sind. Die Sekundärkrone ist demzufolge in zwei Schwenkrichtungen gegenüber der Prothese bzw. Brücke verschwenkbar gelagert. Hierdurch ergeben sich zusätzliche Einstellmöglichkeiten für die Sekundärkrone in Bezug auf die Prothese bzw. Brücke. Aufgrund dieser Einstellbarkeit hat die Sekundärkrone die Möglichkeit, beim Einsetzen und auch beim Herausnehmen der Prothese oder Brücke eine Bewegung auszuführen, die ein Verkanten der Sekundärkrone mit der entsprechenden Primärkrone verhindert. Dies gilt insbesondere, wenn es sich um mehrere Implantate mit Primär- und Sekundärkrone handelt, die in ihrer Achse deutlich divergieren.

Das Lager in der Prothese bzw. der Brücke ist zumindest abschnittsweise komplementär zum Außenmantel der Sekundärkrone ausgebildet, so dass in den komplementär geformten Abschnitten der Außenmantel der Sekundärkrone flächig am Innenmantel des Lagers anliegt und über diese flächige Anlage die zwischen den Implantatteilen wirkenden Kräfte gleichmäßig verteilt werden. Auf diese Weise werden Druckspitzen vermieden.

Die Sekundärkrone kann zumindest annähernd spielfrei in dem Lager in der Prothese bzw. Verblendung aufgenommen sein, um ein unerwünschtes Wackeln der Prothese bzw. Brücke zu verhindern. Es ist allerdings denkbar, dass eine Spielpassung erwünscht ist, um Kaukräfte verstärkt über die Prothese auf die Kieferkammschleimhaut zu übertragen und die Funktion eines Resilienzteleskopes zu erreichen. Gemäß einer weiteren vorteilhaften Ausführung ist vorgesehen, dass an der Sekundärkrone ein sich über den Außenmantel erhebender Vorsprung angeordnet ist, der in eine zugeordnete, zurückgesetzte Ausnehmung in dem Lager mit Bewegungsspielraum einragt. Im Rahmen dieses Bewegungsspielraumes ist die Sekundärkrone in der Lage, gewünschte Schwenkbewegungen gemäß den gegebenen Freiheitsgraden gegenüber der Prothese bzw. Brücke auszuführen. Eine Begrenzung der Schwenkbewegungen wird aber dadurch erreicht, dass der Vorsprung am Außenmantel der Sekundärkrone an seitliche Wandungen der Ausnehmung in dem Lager in Anlage gelangt. Der hierdurch gebildete Anschlag stellt eine wirksame und einfach zu realisierende Begrenzung der Relativ-Schwenkbeweglichkeit der Sekundärkrone gegenüber der Prothese bzw. Brücke dar.

In einer weiteren Ausführung ist vorgesehen, dass zusätzlich an der Primärkrone ein kugel- oder teilkugelförmig ausgebildeter Abschnitt vorgesehen ist, der in eine komplementär geformte Aufnahme in der Sekundärkrone einragt, wodurch zusätzlich auch zwischen Primärkrone und Sekundärkrone rotatorische Bewegungsfreiheitsgrade gegeben sind. Gegenüber Ausführungen aus dem Stand der Technik sind hierdurch zusätzliche Bewegungsmöglichkeiten zur Einstellung der Relativposition zwischen Primär- und Sekundärkrone gegeben. Bei kugelförmiger Ausführung sind zwei Rotationsbewegungsmöglichkeiten gegeben.

Gemäß einer bevorzugten Weiterbildung ist die kugelförmige Aufnahme in der Sekundärkrone, in die der Kugelkopf an der Primärkrone einführbar ist, exzentrisch zum kugelförmigen Außenmantel der Sekundärkrone angeordnet. Die Sekundärkrone besitzt in dieser Ausführung zwei kugelförmige Flächen, die jeweils Bestandteil eines Lagers sind, nämlich zum einen am Außenmantel für die Verbindung zur Prothese bzw. Brücke und zum andern den Innenmantel in der Ausnehmung zur Aufnahme des Kugelkopfes der Primärkrone, wobei die beiden kugelförmigen Flächen bevorzugt exzentrisch zueinander angeordnet sind. Die Exzentrizität zwischen den kugelförmigen Flächen ermöglicht eine zusätzliche, translatorische Bewegungskomponente der Brücke bzw. Prothese gegenüber der Primärkrone. Zwar ermöglichen die kugelförmigen Flächen zwischen Primärkrone und Sekundärkrone einerseits und zwischen Sekundärkrone und Prothese bzw. Brücke andererseits jeweils für sich gesehen nur Rotationsbewegungen; aufgrund der Exzentrizität übt aber die Prothese bzw. Brücke eine zusätzliche translatorische Bewegungskomponente aus.

Gemäß einer vorteilhaften Weiterbildung ist der kugelförmige Abschnitt der Primärkrone, der in die komplementär ausgebildete Aufnahme in der Sekundärkrone einragt, elastisch federnd ausgebildet, wodurch ein Einknöpfen des kugelförmigen Abschnittes in die Aufnahme auch für den Fall ermöglicht wird, dass die Aufnahme sich über einen Winkelbereich > 180° erstreckt und damit einen Hinterschnitt bildet. Aufgrund der Elastizität kann der kugelförmige Abschnitt der Primärkrone zusammengedrückt und in die entsprechend geformte Aufnahme in der Sekundärkrone eingeknöpft werden. Nach dem Einknöpfen nimmt der kugelförmige Abschnitt wieder seine ursprüngliche Gestalt ein, wodurch eine formschlüssige Verbindung zwischen Primär- und Sekundärkrone erreicht wird. Umgekehrt kann die Aufnahme elastisch federnd ausgebildet sein. Aufgrund der Elastizität kann der hohlkugelförmige Abschnitt der Sekundärkrone gespreizt und der kugelförmige Abschnitt der Primärkrone eingeknöpft werden. Nach dem Einknöpfen nimmt der hohlkugelförmige Abschnitt der Sekundärkrone wieder seine ursprüngliche Gestalt ein, wodurch eine formschlüssige Verbindung zwischen Primär- und Sekundärkrone erreicht wird.

Die Elastizität der kugelförmigen Abschnitte an der Primärkrone und oder Sekundärkrone wird durch die Wahl eines elastischen Materials und/oder eine besondere konstruktive Ausgestaltung erzielt. Als Material kommt beispielsweise Hartgummi oder ein sonstiges nachgiebiges und elastisches, jedoch ausreichend festes Material in Betracht. In einer vorteilhaften, konstruktiven Ausgestaltung sind in den kugelförmigen Abschnitten der Primärkrone und, oder Sekundärkrone Ausnehmungen eingebracht, die eine Federwirkung zur Folge haben, so dass die entsprechenden Abschnitte zusammengedrückt oder gespreizt werden können. In dieser Ausführung können die Primär und Sekundärkrone aus Metall bestehen; grundsätzlich kommt aber auch in dieser Ausführung als Material ein Hartgummi oder dergleichen mit einem höheren Maß an Eigenelastizität in Betracht.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch ein Zahnimplantat mit einer Pri- märkrone, einer darauf aufzusetzenden Sekundärkrone und einer auf die Sekundärkrone aufzusetzenden Pro- these, wobei der Außenmantel der Sekundärkrone teil- kugelförmig ausgebildet ist und in einem zugeordneten Lager aufgenommen ist, welches in die Prothese einge- bracht ist,
- Fig. 2: einen Schnitt durch eine Variante eines Zahnimplanta- tes mit Primär- und Sekundärkrone, wobei die Primär- krone hülsenförmig ausgebildet ist und über eine zentrale Schraube zu fixieren ist,
- Fig. 3: einen Schnitt durch eine weitere Variante eines Zahn- implantates mit kugelförmiger Verbindung zwischen Primär- und Sekundärkrone einerseits und Sekundärkro- ne und Prothese andererseits,
- Fig. 4: einen Schnitt durch noch ein weiteres Zahnimplantat, das ähnlich aufgebaut ist wie das Zahnimplantat aus Fig. 3, jedoch mit einem zusätzlichen Absatz auf dem Außenmantel der Sekundärkrone versehen ist, der in eine entsprechende Ausnehmung im Lager der Prothese einragt.

In den Figuren sind gleiche Bauteile mit gleichen Bezugszeichen versehen.

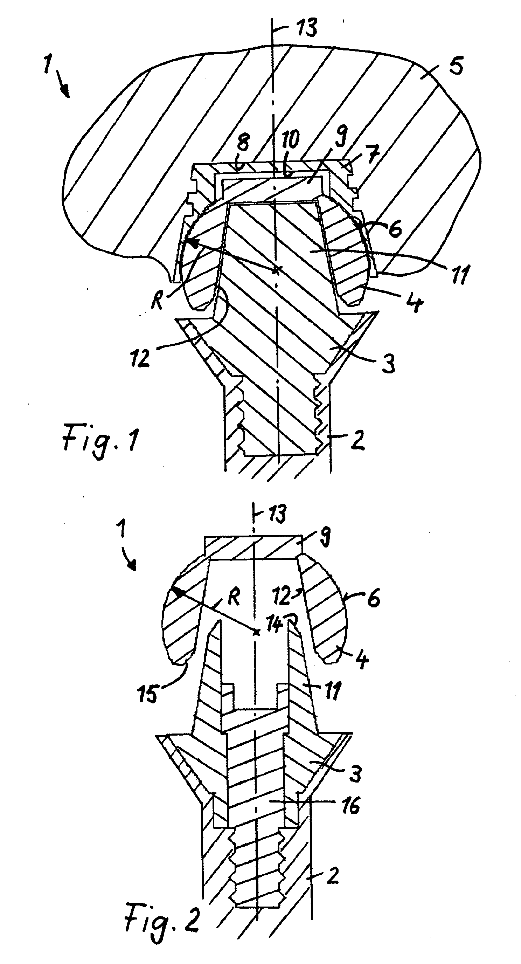

Das in Fig. 1 dargestellte Zahnimplantat 1 besteht aus einem Basisträger 2, der im Kiefer des Patienten zu verankern ist, einer in den Basisträger 2 einzuschraubenden Primärkrone 3, einer mit der Primärkrone verbundenen Sekundärkrone 4 sowie einer Prothese 5 bzw. Brücke oder dergleichen, die auf die Sekundärkrone 4 aufgesetzt wird. Die Schraubverbindung zwischen Basisträger 2 und Primärkrone 3 ist in der Weise ausgeführt, dass im Basisträger 2 ein Schraubinnengewinde vorgesehen ist, in das das Außengewinde an der Primärkrone einzuschrauben ist. Die Verbindung zwischen Primärkrone 3 und Sekundärkrone 4 ist in der Weise ausgestaltet, dass ein nach oben ragender Abschnitt 11 an der Primärkrone 3 konusförmig ausgebildet ist und in eine komplementär geformte Aufnahme 12 einragt, die in die Sekundärkrone 4 eingebracht ist. Hier ist eine Haftreibung zwischen beiden Teilen 11, 12 anzustreben, um einen sicheren Halt der Prothese oder Brücke zu erreichen. Beide Teile 3, 4 sind kraftschlüssig zu verbinden.

Der Außenmantel 6 der Sekundärkrone 4 ist teilkugelförmig ausgestaltet, er ist Bestandteil eines Kugelgelenks, das der Sekundärkrone 4 eine rotatorische Schwenkbeweglichkeit gegenüber der Prothese bzw. Brücke 5 um mindestens zwei Achsen ermöglicht, die jeweils senkrecht zur Längsachse 13 des Zahnimplantates 1 gerichtet sind. Der Außenmantel 6 ist in einem Lager 7 flächig aufgenommen, das als separates Bauteil in eine Ausnehmung 8 in der Prothese bzw. Brücke 5 eingesetzt ist. Der Außenmantel 6 an der Sekundärkrone 4 sowie das Lager 7 bilden gemeinsam das Gelenk.

Über den Außenmantel 6 der Sekundärkrone 4 erhebt sich ein Vorsprung 9, der der Aufnahme 12 für den konusförmigen Abschnitt 11 an der Primärkrone 3 gegenüberliegt und in der montierten Position gemäß Fig. 1 in eine Ausnehmung 10 einragt, die in das Lager 7 eingebracht ist. Der Abschnitt 9 liegt hierbei mit Bewegungsspiel in der Ausnehmung 10, so dass eine Relativ-Schwenkbeweglichkeit zwischen Prothese 5 und Sekundärkrone 4 im Rahmen dieses Bewegungsspiels gegeben ist, zugleich aber die Relativbewegung auf dieses Bewegungsspiel reduziert wird. Der Radius des Außenmantels 6 an der Sekundärkrone 4 ist mit R angegeben.

In Fig. 2 ist eine modifizierte Ausführung eines Zahnimplantates 1 dargestellt, bei der die Primärkrone 3 hülsenförmig ausgebildet ist und über eine Verbindungsschraube 16, die in die Primärkrone 3 eingesetzt ist, mit dem Basisträger 2 verbunden ist. Die Ausführung der Sekundärkrone 4 ist mit derjenigen aus dem Ausführungsbeispiel nach Fig. 1 identisch. Zu erkennen ist auch, dass an der Stirnseite des konusförmigen Abschnittes 11 an der Primärkrone 3 eine Fase 14 angebracht ist; eine entsprechende Fase 15 findet sich auch an der unten liegenden Stirnseite der Sekundärkrone 4. Diese Fasen 14 und 15 erleichtern das Zusammenführen von Primärkrone 3 und Sekundärkrone 4 bei stärkeren Divergenzen zwischen zwei oder mehr Implantaten.

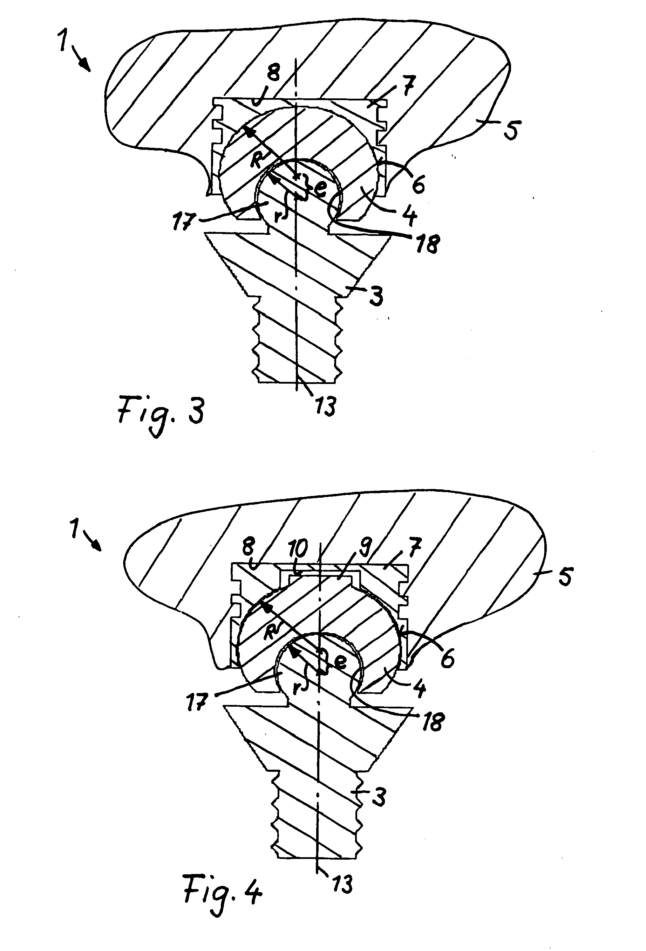

In Fig. 3 ist ein weiteres Ausführungsbeispiel eines Zahnimplantates 1 dargestellt, bei dem die Verbindung zwischen Primärkrone 3 und Sekundärkrone 4 als Kugelgelenkverbindung ausgeführt ist. Die Sekundärkrone 4 weist eine kugelförmige Aufnahme 18 auf, die sich im Schnitt über einen Winkelbereich > 180° erstreckt und in der ein kugelförmiger Abschnitt 17 an der Oberseite der Primärkrone 3 gelenkig gelagert aufgenommen ist. Der kugelförmige Abschnitt bzw. Kugelkopf 17 an der Primärkrone 3 besitzt den Radius r, auch die kugelförmige Aufnahme 18 weist diesen Radius r auf, wodurch eine spielfreie Lagerung des Kugelkopfes in der Aufnahme gegeben ist. Der Radius kann gegebenenfalls auch differieren, wenn eine Spielpassung erwünscht ist.

Der Außenmantel 6 der Sekundärkrone 4 ist ebenfalls kugelförmig ausgebildet und in dem Lager 7 gelenkig aufgenommen, welches in die Ausnehmung 8 in der Prothese bzw. Verblendung 5 eingesetzt ist. Im Unterschied zum Ausführungsbeispiel nach Fig. 1 ist der Außenmantel 6 der Sekundärkrone 4 durchgehend kugelförmig ohne Vorsprung ausgebildet; auch das Lager 7 besitzt eine entsprechende Kugelform. Der Radius des Außenmantels 6 bzw. der korrespondierenden Kugelinnenfläche im Lager 7 ist mit R angegeben.

Wie Fig. 3 weiter zu entnehmen, sind die beiden kugelförmigen Flächen an der Sekundärkrone 4, also die kugelförmige Aufnahme 18 an der Innenseite und der kugelförmige Außenmantel 6 auf der Außenseite exzentrisch zueinander angeordnet, die Exzentrizität ist mit e angegeben. Aufgrund dieser Exzentrizität e kann die Prothese 5 bezogen auf die Primärkrone 3 nicht nur eine rotatorische Bewegung um zwei Achsen senkrecht zu der Längsachse 13 ausüben, sondern zusätzlich auch noch eine Bewegung mit translatorischer Komponente, die dadurch zustande kommt, dass sowohl die Sekundärkrone 4 gegenüber dem kugelförmigen Abschnitt 17 an der Primärkrone 3 verschwenkt wird als auch die Verblendung bzw. Prothese 5 gegenüber der Sekundärkrone 4 und die jeweiligen Drehachsen den Abstand e zueinander aufweisen.

Das Ausführungsbeispiel nach Fig. 4 entspricht im Wesentlichen dem nach Fig. 3, so dass insoweit auf die dortige Beschreibung verwiesen wird. Ein Unterschied besteht jedoch darin, dass am Außenmantel 6 der Sekundärkrone 4 ebenso wie bei den Ausführungsbeispielen nach Fig. 1 und 2 ein überragender Vorsprung 9 vorgesehen ist, der mit Bewegungsspiel in eine zugeordnete Ausnehmung 10 im Lager 7 einragt.

## Patentansprüche

1. Zahnimplantat mit zwei als Primärkrone (3) und Sekundärkrone (4) ausgebildeten und miteinander zu verbindenden Implantatteilen, von denen die Sekundärkrone (4) Träger einer Prothese (5) oder einer Brücke ist, die auf den Außenmantel (6) der Sekundärkrone (4) aufgesetzt ist, wobei der Außenmantel (6) teilkugelförmig ausgebildet und in einem Lager (7) der Prothese (5) oder Brücke in mindestens zwei Ebenen schwenkbar aufnehmbar ist, so dass beim Einsetzen bzw. Herausnehmen der Prothese (5) bzw. Brücke eine Rotationsbewegung zwischen Sekundärkrone (4) und Lager (7) erzeugbar ist,
**dadurch gekennzeichnet,**
**dass** in der Prothese (5) oder Brücke eine Ausnehmung (8) für das Lager (7) vorgesehen ist und dass zur Verbindung zwischen Primärkrone (3) und Sekundärkrone (4) an der Primärkrone (3) ein konus- bzw. kugelförmig ausgebildeter Abschnitt (11) vorgesehen ist, der in eine komplementär geformte Aufnahme (12) in der Sekundärkrone (4) einragt.

2. Zahnimplantat nach Anspruch 1,
**dadurch gekennzeichnet,**
**dass** das Lager (7) zumindest abschnittsweise komplementär zum Außenmantel (6) der Sekundärkrone (4) ausgebildet ist.

3. Zahnimplantat nach Anspruch 1 oder 2,
**dadurch gekennzeichnet,**
**dass** das Lager (7) ein separates Bauteil bildet, das in die Ausnehmung (8) in der Prothese (5) oder Brücke einsetzbar ist.

4. Zahnimplantat nach einem der Ansprüche 1 bis 3,
**dadurch gekennzeichnet,**
**dass** die Sekundärkrone (4) spielfrei im Lager (7) aufgenommen ist.

5. Zahnimplantat nach einem der Ansprüche 1 bis 4,
**dadurch gekennzeichnet,**
**dass** an der Sekundärkrone (4) ein sich über den Außenmantel (6) erhebender Vorsprung (9) angeordnet ist, der in eine zurückgesetzte Ausnehmung (10) im Lager (7) einragt.

6. Zahnimplantat nach Anspruch 5,
**dadurch gekennzeichnet,**
**dass** der Vorsprung (9) mit Spiel in das Lager (7) einragt.

7. Zahnimplantat nach einem der Ansprüche 1 bis 6,
**dadurch gekennzeichnet,**
**dass** die Verbindung zwischen Primärkrone (3) und Sekundärkrone (4) formschlüssig ausgeführt ist.

8. Zahnimplantat nach einem der Ansprüche 1 bis 7,
**dadurch gekennzeichnet,**
**dass** die kugelförmige Aufnahme (18) in der Sekundärkrone (4) exzentrisch zum kugelförmigen Außenmantel der Sekundärkrone (4) angeordnet ist.

9. Zahnimplantat nach einem der Ansprüche 1 bis 8,
**dadurch gekennzeichnet,**
**dass** der kugelförmige Abschnitt (17) der Primärkrone (3) und/oder die kugelförmige Aufnahme (18) in der Sekundärkrone (4) elastisch federnd ausgebildet ist.

10. Zahnimplantat nach Anspruch 9,
**dadurch gekennzeichnet,**
**dass** der kugelförmige Abschnitt (17) der Primärkrone (3) und/oder die kugelförmige Aufnahme (18) in der Sekundärkrone (4) aus einem nachgiebigen, elastischen Material besteht, beispielsweise aus Hartgummi.

11. Zahnimplantat nach Anspruch 9 oder 10,
**dadurch gekennzeichnet,**
**dass** in den kugelförmigen Abschnitt (17) der Primärkrone (3) und/oder in die kugelförmige Aufnahme (18) in der Sekundärkrone (4) Ausnehmungen zur Erzielung einer Federwirkung eingebracht sind.

12. Zahnimplantat nach einem der Ansprüche 1 bis 11,
**dadurch gekennzeichnet,**
**dass** die kugelförmige Aufnahme (18) in der Sekundärkrone (4) sich über einen Winkelabschnitt größer als 180° erstreckt.

13. Zahnimplantat nach einem der Ansprüche 1 bis 12,
**dadurch gekennzeichnet,**
**dass** die Kanten der ineinander greifenden Abschnitte von Primärkrone (3) und Sekundärkrone (4) eine Fase (14 bzw. 15) aufweisen.

## Claims

1. Dental implant with two implant parts, which are designed as primary crown (3) and secondary crown (4) and which are to be connected to each other, of which the secondary crown (4) is a support for a prosthesis (5) or bridge that is mounted on the outer jacket (6) of the secondary crown (4), the outer jacket (6) being designed in the shape of a partial sphere and being able to be received in a bearing (7) of the prosthesis (5) or bridge so as to be pivotable in at least two planes, such that a rotational movement can be generated between secondary crown (4) and bearing (7) upon insertion or removal of the prosthesis (5) or bridge, **characterized in that** a recess (8) for the bearing (7) is provided in the prosthesis (5) or bridge, and **in that**, for the connection between primary crown (3) and secondary crown (4), a conical or spherical portion (11) is provided on the primary crown (3) and projects into a seat (12) of complementary shape in the secondary crown (4).

2. Dental implant according to Claim 1, **characterized in that** the bearing (7) has, at least in part, a design complementing the outer jacket (6) of the secondary crown (4).

3. Dental implant according to Claim 1 or 2, **characterized in that** the bearing (7) forms a separate component that can be inserted into the recess (8) in the prosthesis (5) or bridge.

4. Dental implant according to one of Claims 1 to 3, **characterized in that** the secondary crown (4) is received in the bearing (7) without play.

5. Dental implant according to one of Claims 1 to 4, **characterized in that** a projection (9) arranged on the secondary crown (4) extends above the outer jacket (6) and projects into a recess (10) set back in the bearing (7).

6. Dental implant according to Claim 5, **characterized in that** the projection (9) projects into the bearing (7) with play.

7. Dental implant according to one of Claims 1 to 6, **characterized in that** the connection between primary crown (3) and secondary crown (4) is obtained with a form fit.

8. Dental implant according to one of Claims 1 to 7, **characterized in that** the spherical seat (18) in the secondary crown (4) is arranged eccentrically with respect to the spherical outer jacket of the secondary crown (4).

9. Dental implant according to one of Claims 1 to 8, **characterized in that** the spherical portion (17) of the primary crown (3) and/or the spherical seat (18) in the secondary crown (4) are/is elastically resilient.

10. Dental implant according to Claim 9, **characterized in that** the spherical portion (17) of the primary crown (3) and/or the spherical seat (18) in the secondary crown (4) are/is made of a flexible elastic material, for example hard rubber.

11. Dental implant according to Claim 9 or 10, **characterized in that** recesses are formed in the spherical portion (17) of the primary crown (3) and/or in the spherical seat (18) in the secondary crown (4) in order to achieve a spring effect.

12. Dental implant according to one of Claims 1 to 11, **characterized in that** the spherical seat (18) in the secondary crown (4) extends about an angle section of greater than 180°.

13. Dental implant according to one of Claims 1 to 12, **characterized in that** the edges of the mutually engaging portions of primary crown (3) and secondary crown (4) each have a bevel (14, 15, respectively).

## Revendications

1. Implant dentaire comprenant deux parties d'implant réalisées sous forme de couronne primaire (3) et de couronne secondaire (4) et devant être assemblées l'une à l'autre, dont la couronne secondaire (4) constitue un élément porteur pour une prothèse (5) ou un bridge, qui est posé sur l'enveloppe extérieure (6) de la couronne secondaire (4), l'enveloppe extérieure (6) étant réalisée en forme de sphère partielle et pouvant être reçue dans un support (7) de la prothèse (5) ou du bridge de manière à pouvoir pivoter dans au moins deux plans, de sorte que lors de l'insertion ou du retrait de la prothèse (5) ou du bridge, un mouvement de rotation entre la couronne secondaire (4) et le support (7) puisse être effectué,
**caractérisé en ce**
**qu'**un évidement (8) pour le support (7) est prévu dans la prothèse (5) ou le bridge, et en ce que, pour l'assemblage entre la couronne primaire (3) et la couronne secondaire (4), on prévoit sur la couronne primaire (3) une portion (11) réalisée sous forme conique ou sphérique, qui pénètre dans un logement (12) de forme complémentaire dans la couronne secondaire (4).

2. Implant dentaire selon la revendication 1,
**caractérisé en ce que**
le support (7) est réalisé au moins en partie de manière complémentaire à l'enveloppe extérieure (6) de la couronne secondaire (4).

3. Implant dentaire selon la revendication 1 ou 2,
**caractérisé en ce que**
le support (7) forme un composant séparé qui peut être inséré dans l'évidement (8) dans la prothèse (5) ou le bridge.

4. Implant dentaire selon l'une quelconque des revendications 1 à 3,
**caractérisé en ce que**
la couronne secondaire (4) est reçue sans jeu dans le support (7).

5. Implant dentaire selon l'une quelconque des revendications 1 à 4,
**caractérisé en ce que**
l'on dispose sur la couronne secondaire (4) une saillie (9) dépassant au-dessus de l'enveloppe extérieure (6), qui pénètre dans un évidement (10) en retrait dans le support (7).

6. Implant dentaire selon la revendication 5,
**caractérisé en ce que**
la saillie (9) pénètre avec jeu dans le support (7).

7. Implant dentaire selon l'une quelconque des revendications 1 à 6,
**caractérisé en ce que**
l'assemblage entre la couronne primaire (3) et la couronne secondaire (4) est réalisé par engagement par correspondance géométrique.

8. Implant dentaire selon l'une quelconque des revendications 1 à 7,
**caractérisé en ce que**
le logement de forme sphérique (18) dans la couronne secondaire (4) est disposé de manière excentrée par rapport à l'enveloppe extérieure de forme sphérique de la couronne secondaire (4).

9. Implant dentaire selon l'une quelconque des revendications 1 à 8,
**caractérisé en ce que**
la portion de forme sphérique (17) de la couronne primaire (3) et/ou le logement de forme sphérique (18) dans la couronne secondaire (4), sont réalisés de manière élastique à ressort.

10. Implant dentaire selon la revendication 9,
**caractérisé en ce que**
la portion de forme sphérique (17) de la couronne primaire (3) et/ou le logement de forme sphérique (18) dans la couronne secondaire (4) se composent d'un matériau flexible élastique, par exemple de caoutchouc dur.

11. Implant dentaire selon la revendication 9 ou 10,
**caractérisé en ce que**
des évidements destinés à produire un effet de ressort sont pratiqués dans la portion de forme sphérique (17) de la couronne primaire (3) et/ou dans le logement de forme sphérique (18) dans la couronne secondaire (4).

12. Implant dentaire selon l'une quelconque des revendications 1 à 11,
**caractérisé en ce que**
le logement de forme sphérique (18) dans la couronne secondaire (4) s'étend sur une portion angulaire supérieure à 180°.

13. Implant dentaire selon l'une quelconque des revendications 1 à 12,
**caractérisé en ce que**
les arêtes des portions s'engageant mutuellement de la couronne primaire (3) et de la couronne secondaire (4) présentent un biseau (14 respectivement 15).
